# EUROPEAN PATENT APPLICATION

(11) **EP 2 727 754 A1**
(43) Date of publication of application: **07.05.2014**
(21) Application number: 13191134.9
(22) Date of filing: 31.10.2013
(51) Int. Cl.: B60H 1/00, F25B 30/02, B60H 1/32

(54) **Vehicle air conditioner**

(30) Priority: 31.10.2012 JP 2012240697; 31.10.2012 JP 2012240700
(71) Applicant: Mitsubishi Jidosha Kogyo K.K., Tokyo 108-8410 (JP)
(72) Inventor: Moritaka, Atsushi, Tokyo, 108-8410 (JP); Fujiwara, Shinya, Tokyo, 108-8410 (JP); Umezu, Kohei, Tokyo, 108-8410 (JP)
(74) Representative: Vossius & Partner

(57) **Abstract**

A vehicle air conditioner, which can suppress the occurrence of an abnormal noise when switching the operation mode of air conditioning, is provided. The vehicle air conditioner comprises compression means 11 for compressing a heating medium, pressure reducing means 21,22 for reducing the pressure of the heating medium, a heat exchanger 12,13,14 for performing heat exchange between the heating medium and air, a flow passage 16 having a heating path 16b and a cooling path 16a, a flow passage selector valve 24 for changing the path in the flow passage, and a control unit 10 for allowing the flow passage selector valve to act in accordance with an air conditioning operation mode. If a switching instruction on the air conditioning operation mode is inputted, the control unit 10 stops the compression means 11, and also defers the action of the flow passage selector valve 24 until a predetermined time elapses or until a pressure difference between the paths 16a, 16b becomes a predetermined value or less.

## Description

This invention relates to a vehicle air conditioner.

A heat pump system (vapor compression refrigerating system), which has a compressor, a vehicle interior condenser, a vehicle exterior condenser, a vehicle interior evaporator, and a pressure reducing means, has so far been known as a vehicle air conditioner. With an electric vehicle, unlike an engined car, heat from a drive source cannot be utilized for heating the vehicle interior, and thus such a heat pump system is adopted (see, for example, Patent Document No. JP-A-2011-240725). The heat pump system described in the above Patent Document includes a flow passage for cooling in which, at the time of cooling, a heating medium expanded upon pressure reduction by the pressure reducing means is subjected to heat exchange by the interior evaporator to cool air; and a flow passage for heating in which, at the time of heating, the heating medium compressed by the compressor is subjected to heat exchange by the interior condenser to heat air. A flow passage switching means switches between the flow passages depending on cooling or heating.

In the above-mentioned heat pump system, the heating medium is compressed or expanded for use, so that the pressure exerted on the heating medium differs between the flow passage for cooling and the flow passage for heating. This poses the problem that when switching between a cooling operation mode and a heating operation mode, for example, an abnormal noise occurs. Moreover, when the operation mode is switched to an operation stop mode, namely, when air conditioning is stopped, for example, transfer of a flow passage selector valve in an open state to a closed state may generate an abnormal noise owing to a pressure difference of the heating medium between the flow passages.

The present invention has been accomplished in the light of the above-mentioned situations. It is an obj ect of this invention to provide a vehicle air conditioner which can suppress the occurrence of an abnormal noise when switching the operation mode of air conditioning. This object is achieved by the vehicle air conditioner as recited in the claims.

A first aspect of the present invention for solving the above problems is a vehicle air conditioner, comprising: compression means which is driven by electric power from a secondary battery installed on a vehicle to compress a heating medium; pressure reducing means for reducing the pressure of the heating medium; a heat exchanger for performing heat exchange between the heating medium and air; a flow passage having a heating path through which the heating medium passes during heating, anda cooling path through which the heating medium passes during cooling; a flow passage selector valve for changing the path in the flow passage; and a control unit for allowing the flow passage selector valve to act in accordance with an air conditioning operation mode, characterized in that if a switching instruction on the air conditioning operation mode is inputted, the control unit stops the compression means, and also defers the actionof the flowpassage selector valve until a predetermined time elapses.

With the present invention as described above, in the presence of a switching instruction on the air conditioning operation mode, the control unit stops the compression means, and defers the switching action of the flow passage selector valve until a lapse of the predetermined time. This can suppress the occurrence of an abnormal noise due to the pressure difference of the heating medium during switching of the flow passage selector valve.

A second aspect of the present invention is the vehicle air conditioner according to the first aspect, wherein when the pressure difference between the paths becomes apredeterminedvalue or less, the control unit determines that the predetermined time has elapsed. By so doing, the occurrence of an abnormal noise due to the pressure difference of the heating medium during switching of the flow passage selector valve can be suppressed more reliably.

A third aspect of the present invention is the vehicle air conditioner according to the second aspect, wherein if the switching instruction on the air conditioning operation mode is an instruction for switching between a cooling operation mode and a heating operation mode, the control unit stops the compression means, and defers the switching action of the flow passage selector valve until the pressure difference between the paths becomes the predetermined value or less, whereafter the control unit performs the switching action of the flow passage selector valve, and also allows the compressionmeans to act again. By so doing, the control unit can switch between the cooling operation mode and the heating operation mode while suppressing the occurrence of an abnormal noise due to the pressure difference of the heating medium during switching of the flow passage selector valve.

A fourth aspect of the present invention is the vehicle air conditioner according to the second or third aspect, further comprising pressure measuring means for measuring the pressure in the flowpassage, wherein if the pressure measured by the pressure measuring means is a predetermined value or less, the control unit determines that the pressure difference between the paths is the predetermined value or less. By measuring the pressure in the flow passage in this manner, the pressure difference can be estimated with ease, and it can be determined easily whether or not this pressure difference is the predetermined value or less.

A fifth aspect of the present invention is the vehicle air conditioner according to any one of the first to fourth aspects, wherein the air conditioning operation mode includes an operation stop mode for stopping the operation of the vehicle air conditioner. Because of this feature, the pressure difference in the heating medium narrows, so that the occurrence of an abnormal noise when the operation is stopped in the air conditioning operation mode can be suppressed.
A sixth aspect of the present invention is the vehicle air conditioner according to the fifth aspect, wherein the vehicle is an electric vehicle and, if the instruction for switching to the operation stop mode is inputted while the operation of the vehicle is stopping, the control unit defers the action of the flow passage selector valve until the lapse of the predetermined time. Thus, even in the electric vehicle, the occupant's overconcern about an abnormal noise can be suppressed.

A seventh aspect of the present invention is a vehicle air conditioner, comprising: compression means which is driven by electric power from a secondary battery installed on a vehicle to compress a heating medium; pressure reducing means for reducing the pressure of the heating medium; a heat exchanger for performing heat exchange between the heating medium and air; a flow passage having a heatingpath throughwhich the heatingmediumpasses during heating, and a cooling path through which the heating medium passes during cooling; a flow passage selector valve for changing the path in the flow passage; and a control unit for allowing the flow passage selector valve to act in accordance with an air conditioning operation mode, characterized in that if a switching instruction on the air conditioning operation mode is inputted, the control unit stops the compression means, and also defers the switching action of the flow passage selector valve until a pressure difference between the paths becomes a predetermined value or less.

With the present invention described above, in the presence of a switching instruction on the air conditioning operation mode, the control unit stops the compression means, and defers the switching action of the flow passage selector valve until the pressure difference between the paths becomes the predetermined value or less. This can suppress the occurrence of an abnormal noise due to the pressure difference in the heating medium during switching of the flow passage selector valve.

According to the vehicle air conditioner of the present invention, the excellent effect of suppressing the occurrence of an abnormal noise when switching the operation mode can be exhibited. In the following the invention will be described with reference to the drawings, in which:
Fig. 1 is a schematic view of a heat pump system according to a vehicle air conditioner of an embodiment of the present invention.
Fig. 2 is a schematic view for illustrating the driving of the heat pump system during cooling by the vehicle air conditioner.
Fig. 3 is a schematic view for illustrating the driving of the heat pump system during heating by the vehicle air conditioner.
Fig. 4 is a timing chart showing the timing of switching electromagnetic valves in the vehicle air conditioner.
Fig. 5 is a timing chart showing the timing of control by a control device in the vehicle air conditioner.

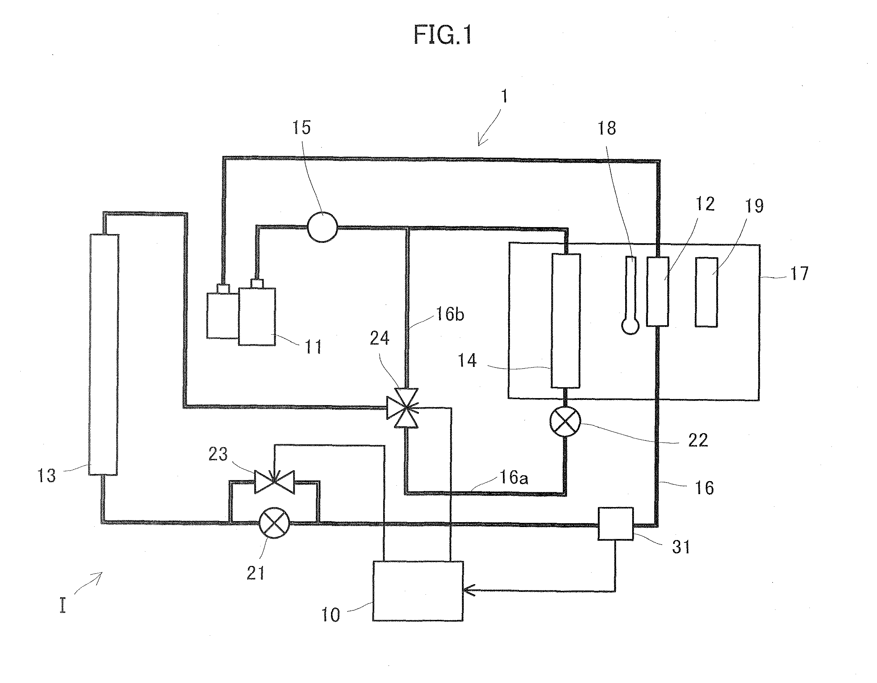

First of all, the heat pump system according to the vehicle air conditioner of the embodiment of the present invention will be described with reference to Fig. 1.

A vehicle air conditioner I has a heat pump system 1. The heat pump system 1 is equipped with an electric compressor (compression means) 11, a vehicle interior condenser (heat exchanger) 12, a vehicle exterior condenser (heat exchanger) 13, an evaporator (heat exchanger) 14, an accumulator 15, a first expansion valve (pressure reducing means) 21, and a second expansion valve (pressure reducing means) 22. These components are connected by piping 16 constituting a flowpassage for a heating medium. The heat pump system 1 is furnished with the flow passage having a cooling path and a heating path, details of which will be described later. The cooling path is a path through which the heating medium passes at the time of cooling, and is constituted by the electric compressor 11, the vehicle interior condenser 12, the vehicle exterior condenser 13, the second expansion valve 22, and the accumulator 15 connected in this order by the piping 16. The heating path is a path through which the heating medium passes at the time of heating, and is constituted by the electric compressor 11, the vehicle interior condenser 12, the first expansion valve 21, the vehicle exterior condenser 13, and the accumulator 15 connected in this order by the piping 16. The vehicle air conditioner I also has a control unit 10 for driving the heat pump system 1.

The electric compressor 11 receives electric power supplied from a driving secondary battery to compress the heating medium, thereby bringing it into a high temperature, high pressure state. This action of the electric compressor 11 is controlled by the control unit 10. Upon inputting an instruction for operation of air conditioning by an occupant, for example, the control unit 10 starts supply of electric power from the driving secondary battery to the electric compressor 11.

The vehicle interior condenser 12 performs heat exchange between the heating medium and air inside the vehicle compartment. The vehicle interior condenser 12 is provided within an air conditioning housing 17. A blower fan (not shown), the above-mentioned evaporator 14, an air mix damper 18, and a PTC heater 19 are provided inside the air conditioning housing 17. The vehicle interior condenser 12 is provided within the air conditioning housing 17 on a side downstream, in the direction of air f low, of the evaporator 14. The air mix damper 18 is provided between the evaporator 14 and the vehicle interior condenser 12, and is adapted to be different in the state of opening and closing between heating and cooling. The PTC heater 19 is provided within the air conditioning housing 17 on a side downstream, in the direction of air flow, of the vehicle interior condenser 12. The heating medium which has passed through the vehicle interior condenser 12 is delivered to the vehicle exterior condenser 13 via the piping 16.

On the piping 16 between the vehicle interior condenser 12 and the vehicle exterior condenser 13, the first expansion valve 21 and a two-way electromagnetic valve (flow passage selector valve) 23 are provided. The two-way electromagnetic valve 23 is provided inparallel with the first expansionvalve 21. The two-way electromagnetic valve 23 has its opening or closing controlled by the control unit 10. When the two-way electromagnetic valve 23 is ON, the heating medium flows through the first expansion valve 21. When the two-way electromagnetic valve 23 is OFF, the heating medium flows through the two-way electromagnetic valve 23.

The vehicle exterior condenser 13 performs heat exchange between the heating medium and air outside the vehicle compartment. Downstream of the vehicle exterior condenser 13 in the flow passage for the heating medium, a three-way electromagnetic valve (flow passage selector valve) 24 is provided. Switching of the three-way electromagnetic valve 24 can change a passageway along which the heating medium passes. The heating medium that has passed through the vehicle exterior condenser 13 is delivered to the evaporator 14 via piping 16a at the time of cooling, and is delivered to the accumulator 15 via piping 16b at the time of heating, details of the deliveries being presented later. That is, the path in the flow passage can be changed between the heating path and the cooling path. In the present embodiment, the switching action of the three-way electromagnetic valve 24 is controlled by the control unit 10. In detail, when the three-way electromagnetic valve 24 is controlled to the ON state by the control unit 10, the heating medium flows through the piping 16a; when the three-way electromagnetic valve 24 is controlled to the OFF state by the control unit 10, the heating medium flows through the piping 16b.

The second expansion valve 22 is provided between the three-way electromagnetic valve 24 and the evaporator 14. The second expansion valve 22 functions as a pressure reducing means, which expands the heating medium to reduce its pressure, thereby lowering the temperature of the heating medium.

The evaporator 14 performs heat exchange between the heating medium and air inside the vehicle compartment to cool air fed into the vehicle compartment. The accumulator 15 functions as a reservoir for storing the heating medium.

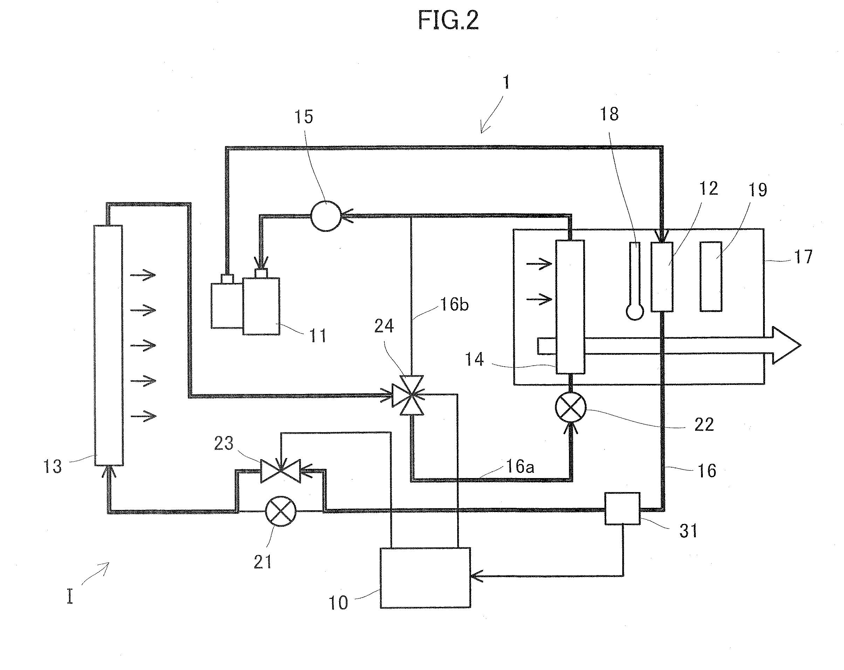

Next, the action of the heat pump system during cooling will be explained using Fig. 2.

Upon entry of an instruction for cooling operation by the occupant, the control unit 10 exercises control so as to bring the two-way electromagnetic valve 23 into the OFF state and the three-way electromagnetic valve 24 into the ON state, and also actuates the electric compressor 11.

The heating medium that has been compressed by the electric compressor 11 to have a high temperature and a high pressure passes through the piping 16, and flows into the vehicle interior condenser 12. Since the vehicle interior condenser 12 does not act during cooling, the heating medium simply passes through the vehicle interior condenser 12. During cooling, the air mix damper 18 has its opening or closing state controlled so as to oppose the vehicle interior condenser 12.

The heating medium having passed through the vehicle interior condenser 12 flows through the two-way electromagnetic valve 23 because of its OFF state, and flows into the vehicle exterior condenser 13. The heating medium which has flowed into the vehicle exterior condenser 13 exchanges heat with outdoor air in the vehicle exterior condenser 13 to release heat, whereby the temperature of the heating medium slightly lowers.

The heating medium having passed through the vehicle exterior condenser 13 passes through the second expansion valve 22, since the three-way electromagnetic valve 24 is in the ON state. The heating medium has its pressure reduced and its temperature lowered during its passage through the second expansion valve 22.

The heating medium that has passed through the second expansion valve 22 flows into the evaporator 14. Within the evaporator 14, the heating medium exchanges heat with indoor air to absorb heat therefrom, thereby cooling the indoor air. The resulting cooled indoor air is supplied into the vehicle compartment.

The heating medium which has passed through the evaporator 14 flows into the accumulator 15, and then flows into the electric compressor 11, where it is compressed again. Then, the heating medium flows through the flowpassage in the same manner as described above. That is, the path of the heating medium indicated by thick lines in Fig. 2 constitutes the cooling path.

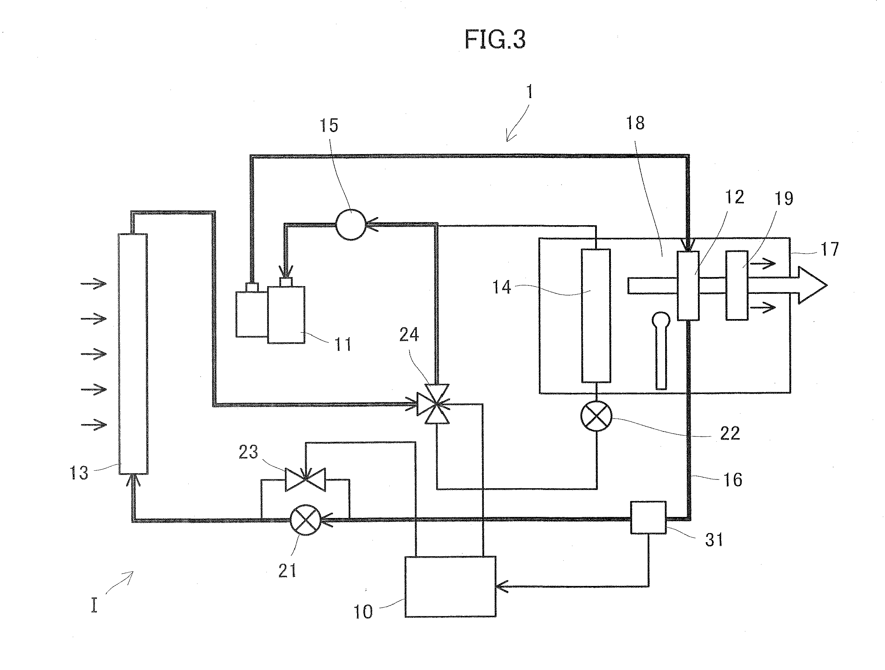

Next, the action of the heat pump system during heating will be explained using Fig. 3.

When an instruction for heating is inputted by the occupant, the control unit 10 exercises control so as to bring the two-way electromagnetic valve 23 into the ON state and the three-way electromagnetic valve 24 into the OFF state, and also actuates the electric compressor 11.

The heating medium that has been compressed by the electric compressor 11 to have a high temperature and a high pressure passes through the piping 16, and flows into the vehicle interior condenser 12. Since the vehicle interior condenser 12 acts during heating, the heating medium exchanges heat with air inside the vehicle compartment in the vehicle interior condenser 12 to release heat. On the other hand, the air heated upon heat exchange is heated further during its passage through the PTC heater 19. Then, this heated indoor air is supplied, as warm air, into the vehicle compartment. In this case, the air mix damper 18 has its opening or closing state controlled so as not to oppose the vehicle interior condenser 12.

The heating medium having passed through the vehicle interior condenser 12 flows through the first expansion valve 21, because the two-way electromagnetic valve 23 is in the ON state. The heating medium when passing through the first expansion valve 21 is reduced in pressure and lowered in temperature. The reduced-pressure heating medium flows into the vehicle exterior condenser 13. The heating medium which has flowed into the vehicle exterior condenser 13 exchanges heat with outdoor air in the vehicle exterior condenser 13 to absorb heat, whereby the temperature of the heating medium is slightly raised.

Then, the heating medium having passed through the vehicle exterior condenser 13 flows into the accumulator 15, because the three-way electromagnetic valve 24 is in the OFF state. Then, the heating medium flows into the electric compressor 11, where it is compressed again. Then, the heating medium flows through the flow passage in the same manner as described above. That is, the path of the heating medium indicated by thick lines in Fig. 3 constitutes the heating path.

By the way, the vehicle air conditioner, which performs air conditioning within the vehicle compartment with the use of the heat pump system 1, carries out heating and cooling by utilization of a heat cycle involving the compression and pressure reduction of the heating medium. For example, after the heating medium is brought into a high temperature, highpressure state by the electric compressor 11, it is reduced in pressure by the expansion valve. With such a configuration, the state of the pressure of the heating medium greatly differs between cooling and heating. If each electromagnetic valve is actuated in accordance with switching between cooling and heating, therefore, the pressure state of the heating medium changes, causing a pressure difference to the heating medium. Because of this pressure difference, a flow of the heating medium changes, potentially producing an abnormal noise.

During stoppage of operation of air conditioning as well, the state of the pressure of the heating medium is greatly different from that during cooling or heating. Thus, also when each electromagnetic valve is actuated in association with the stoppage of cooling or heating, the pressure state of the heating medium changes, causing a pressure difference to the heating medium. Because of this pressure difference, a flow of the heating medium changes, and may produce an abnormal noise.

According to the present embodiment, in view of the above situations, pressure control is exercised in switching the operation mode (operating state) of the vehicle air conditioner, whereby the occurrence of an abnormal noise at the time of switching the operationmode is suppressed. The operationmode of the vehicle air conditioner, referred to herein, includes a cooling operation mode in which a cooling operation is performed, a heating operation mode in which a heating operation is performed, and an operation stop mode in which the operation of the vehicle air conditioner is stopped.

The pressure control will be explained in detail. First, an explanation will be offered for control to be exercised when an instruction for switching between the heating operation mode and the cooling operation mode is inputted to the control unit 10.

At the time of switching the operation mode of the vehicle air conditioner, for example, upon entry of an instruction for switching between the heating operation mode and the cooling operation mode, the control unit 10 stops the electric compressor 11 first of all. On the other hand, the control unit 10 defers the switching actions of the two-way electromagnetic valve 23 and the three-way electromagnetic valve 24 until a predetermined time elapses after stopping the electric compressor 11. That is, the two-way electromagnetic valve 23 and the three-way electromagnetic valve 24 remain stopped until a lapse of the predetermined time, and become active at a time when the predetermined time has elapsed.

The predetermined time refers, concretely, to a time until the pressure difference of the heating medium becomes smaller than a predetermined value. That is, when the electric compressor 11 is stopped, the pressure difference of the heating medium within the flow passage gradually narrows, and becomes smaller than the predetermined value after the lapse of the predetermined time.

The method of determining whether or not the predetermined time has elapsed may, for example, be to measure time by a timer, but is not limited thereto.

In the present embodiment, when an instruction for switching of the operation mode is inputted, the control unit 10 measures the time to start the timer, and initiates determination of valve switching with the use of the pressure value of the heating medium which has been detected by a pressure detection sensor 31. When the vehicle power supply is in the ON state, the pressure detection sensor 31 detects the pressure of the heating medium, and feeds the detected pressure value to the control unit 10. The pressure detection sensor 31 is provided between the vehicle interior condenser 12 and the two-way electromagnetic valve 23.

The determination of valve switching, if put another way, is a determination of whether or not the predetermined time has passed. Concretely, if the pressure detection value detected by the pressure detection sensor 31 is the predetermined value or lower, it is determined that the predetermined time has elapsed. If the pressure detection value is greater than the predetermined value, it is determined that the predetermined time has not elapsed.

When the pressure detection value becomes the predetermined value or less, the control unit 10 allows the electric compressor 11 to act again, and also switches between the ON and OFF states of the two-way electromagnetic valve 23 and the three-way electromagnetic valve 24. By so doing, the operation mode (operating state) of the air conditioner is switched, and the cooling operation or heating operation is started.

As noted above, when the pressure detection value becomes the predetermined value or less, the control unit 10 determines that the predetermined time has elapsed, and the pressure difference of the heating medium in the entire heat pump system has become smaller than the predetermined value. If necessary, the control unit 10 starts the action of the electric compressor 11, and performs switching of the two-way electromagnetic valve 23 and the three-way electromagnetic valve 24 to switch the operation mode (operating state) of the air conditioner. This measure can suppress the occurrence of an abnormal noise due to the pressure difference of the heating medium at the time of switching the operation mode.

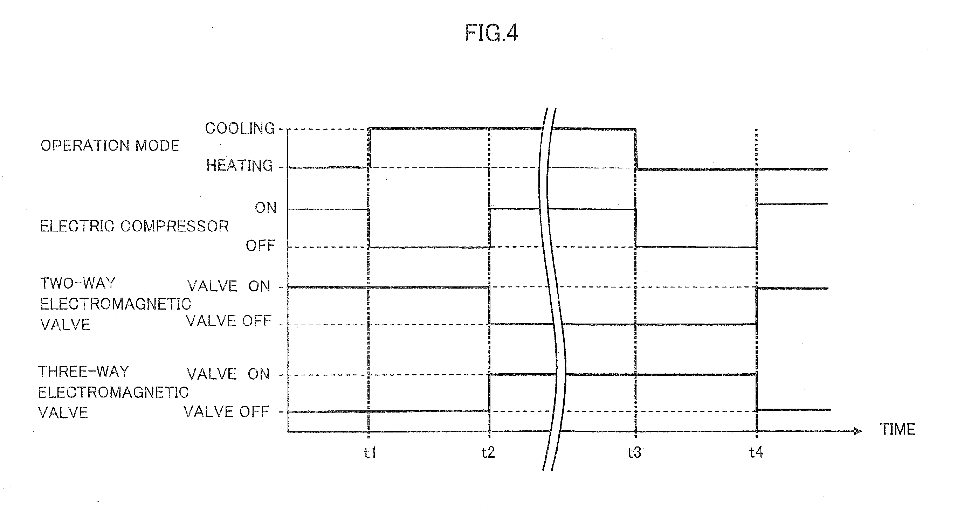

Next, pressure control when the operation mode is switched from the heating operation mode to the cooling operation mode will be described further by reference to a time chart as shown in Fig. 4.

In the example shown in Fig. 4, a switching instruction to switch the operation mode from the heating operation mode to the cooling operation mode is inputted to the control unit 10 at t=t1. In this case, the control unit 10 stops the action of the electric compressor, but does not immediately perform valve switching of the two-way electromagnetic valve and the three-way electromagnetic valve. While the valve switching of the two-way electromagnetic valve and the three-way electromagnetic valve is being deferred, the control unit 10 makes a determination of valve switching with the use of the pressure detection value detected by the pressure detection sensor. That is, when the instruction for switching between the heating operation mode and the cooling operation mode has been inputted to the control unit 10, the control unit 10 determines whether or not the predetermined time has elapsed, not based on measurement by the timer, but based on the pressure detection value detected by the pressure detection sensor.

Then, at t=t2, when the pressure detection value detected by the pressure detection sensor becomes the predetermined value or less, namely, when the predetermined time has elapsed, the control unit 10 estimates that the pressure difference of the heating medium in the heat pump system is a predetermined value or lower. Thus, the control unit 10 starts the action of the electric compressor, and performs valve switching of the two-way electromagnetic valve and the three-way electromagnetic valve. In this manner, valve switching is performed in a state where the pressure difference of the heating medium in the heat pump system is the predetermined value or less, whereby the occurrence of an abnormal noise associated with valve switching can be suppressed.

At t=t3, a switching instruction to switch the operation mode from the cooling operation mode to the heating operation mode is inputted to the control unit 10. In this case as well, the control unit 10 stops the action of the electric compressor, but does not immediately perform valve switching of the two-way electromagnetic valve and the three-way electromagnetic valve. Using the pressure detection value detected by the pressure detection sensor 31, the control unit 10 makes a determination of valve switching. At t=t4 , when the pressure detection value detected by the pressure detection sensor becomes the predetermined value or less, the control unit 10 starts the action of the electric compressor, and performs valve switching of the two-way electromagnetic valve and the three-way electromagnetic valve. In this case, the pressure difference of the heating medium in the heat pump system is the predetermined value or lower, so that the occurrence of an abnormal noise during valve switching can be suppressed.

In the present embodiment, as described above, when the pressure difference of the heating medium in the heat pump system becomes the predetermined value or lower, each electromagnetic value is changed over. Thus, the occurrence of an abnormal noise during valve switching can be suppressed.

Next, control to be exercised when an instruction for switching the operation mode from the heating operation mode or the cooling operation mode to the operation stop mode is inputted to the control unit 10 will be described.

Even when the vehicle stops, and air conditioning operation is switched from the heating operation mode or the cooling operation mode to the operation stop mode (when the air conditioner is turned off, with the operation of the vehicle being stopped), the control unit 10 stops the electric compressor 11. On the other hand, the control unit 10 defers the actions of the two-way electromagnetic valve 23 and the three-way electromagnetic valve 24 until a predetermined time elapses after stopping the electric compressor 11. That is, the two-wayelectromagnetic valve 23 and the three-way electromagnetic valve 24 remain stopped until a lapse of the predetermined time, and become active at a time when the predetermined time has elapsed.

Moreover, simultaneously with the act of stopping the electric compressor 11, the control unit 10 starts the timer, and measures the time which has passed since the stoppage of the electric compressor 11. At a time when the timer attains the predetermined time, the control unit 10 allows the two-way electromagnetic valve 23 and the three-way electromagnetic valve 24 to act, thereby bringing them into the OFF state. By this procedure, the vehicle air conditioner comes to a complete halt.

If the instruction for switching to the operation stop mode is inputted to the control unit 10, as mentioned above, the control unit 10 determines, when the timer attains the predetermined time, that the pressure difference in the entire heat pump system has vanished. Based on this determination, the control unit 10 performs valve switching to bring the operating state of the air conditioner to a complete halt. Hence, the occurrence of an abnormal noise due to the pressure difference of the heating medium at the time of vehicle stoppage can be suppressed.

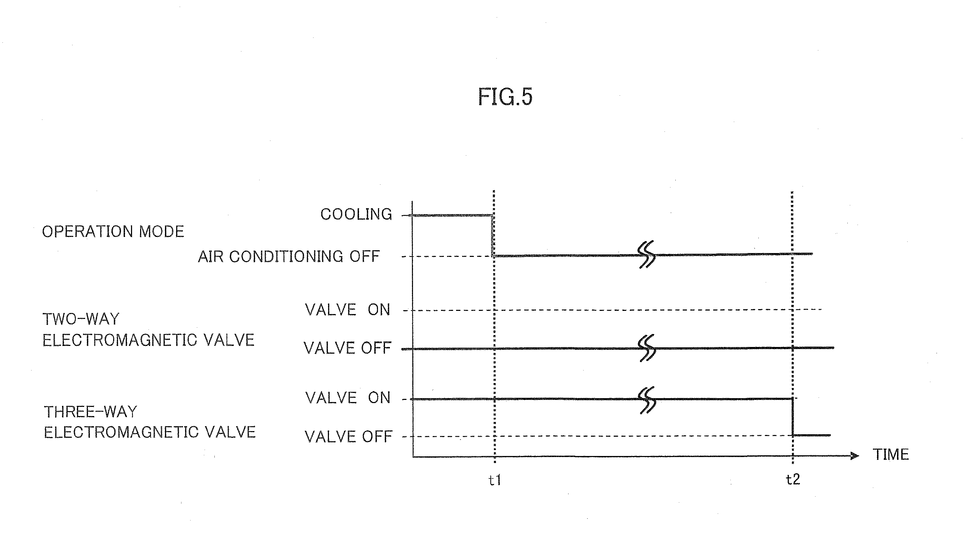

Hereinbelow, pressure control when the operation mode is switched to a vehicle stop mode will be described further by reference to a time chart as shown in Fig. 5.

In the example shown in Fig. 5, a vehicle run stops, for example, at t=t1, when the operation mode of air conditioning is switched to the operation stop mode. At this time, the control unit 10 stops the action of the electric compressor, but does not immediately perform valve switching of the three-way electromagnetic valve. Since the two-way electromagnetic valve is already in the OFF state, its valve switching is not performed. Simultaneously, the control unit 10 starts the timer.

Then, at t=t2, when the timer reaches the predetermined time, the control unit 10 estimates that the pressure difference of the heating medium in the heat pump system is the predetermined value or lower. Based on this estimation, the control unit 10 performs valve switching of the three-way electromagnetic valve.

As seen above, even in a case where the operation mode of the air conditioner is switched to the vehicle stop mode, the electromagnetic valve is switched at a time when the timer attains the predetermined time, namely, at a time when the pressure difference of the heating medium in the heat pump system becomes the predetermined value or less. By so doing, the occurrence of an abnormal noise during valve switching can be suppressed.

Furthermore , whether or not the predetermined time has elapsed is determined by time measurement made by the timer. Even when the vehicle is stopping, therefore, the occurrence of an abnormal noise due to valve switching can be prevented easily. If, for example, an attempt to determine whether or not the predetermined time has elapsed is made, during stoppage of the vehicle, base on the pressure detection value of the pressure detection sensor, there will be need to supply electric power to the sensor from a 12V battery (accessory battery) provided in the vehicle. In order to convert the voltage of this power from the 12V battery into a sensor voltage, it will be further necessary to drive a converter. Also, a dark current will grow. Thus, it is not preferred to detect the pressure change of the heating medium by the sensor after the vehicle stops.

As detailed above, by contrast, the control unit allows only the timer to act and determines based on an elapsed time whether or not the pressure difference of the heating medium has narrowed. Using this procedure, the occurrence of an abnormal noise can be suppressed, without need for a particular separate member, and with a dark current kept low.

In the present embodiment, an explanation has been offered in the case where the operation of the vehicle is stopped, namely, the case where the vehicle stops and the air conditioner falls into the vehicle stop mode. However, the present invention can be applied also to a case where the air conditioner falls into the vehicle stop mode while the vehicle is running.

The present invention has been described above in regard to the one embodiment thereof, but it is to be noted that the present invention is in way limited to this embodiment.

In the foregoing embodiment, for example, an explanation has been presented for an example in which the air conditioning operation mode includes the cooling operation mode, the heating operation mode, and the operation stop mode. However, the air conditioning operation mode may further include a dehumidifying operation mode and a blowing operation mode, for example. Explanations of Letters or Numerals
- 1: Heat pump system
- 10: Control unit
- 11: Electric compressor
- 12: Vehicle interior condenser
- 13: Vehicle exterior condenser
- 14: Evaporator
- 15: Accumulator
- 16: Piping
- 17: Air conditioning housing
- 18: Air mix damper
- 19: Heater
- 21: First expansion valve
- 22: Second expansion valve
- 23: Two-way electromagnetic valve
- 24: Three-way electromagnetic valve
- 31: Pressure detection sensor
- I: Vehicle air conditioner

## Claims

1. A vehicle air conditioner, comprising:
compression means which is driven by electric power from a secondary battery installed on a vehicle to compress a heating medium;
pressure reducing means for reducing a pressure of the heating medium;
a heat exchanger for performing heat exchange between the heating medium and air;
a flow passage having a heating path through which the heating medium passes during heating, and a cooling path through which the heating medium passes during cooling;
a flow passage selector valve for changing the path in the flow passage; and
a control unit for allowing the flow passage selector valve to act in accordance with an air conditioning operation mode,
**characterized in that** if a switching instruction on the air conditioning operation mode is inputted, the control unit stops the compression means, and also defers an action of the flow passage selector valve until a predetermined time elapses.

2. The vehicle air conditioner according to claim 1, wherein
when a pressure difference between the paths becomes a predetermined value or less, the control unit determines that the predetermined time has elapsed.

3. The vehicle air conditioner according to claim 2, wherein
if the switching instruction on the air conditioning operation mode is an instruction for switching between a cooling operation mode and a heating operation mode, the control unit stops the compressionmeans, and defers a switching action of the flow passage selector valve until the pressure difference between the paths becomes the predetermined value or less, whereafter the control unit performs the switching action of the flow passage selector valve, and also allows the compression means to act again.

4. The vehicle air conditioner according to claim 2 or 3,
further comprising pressure measuring means for measuring a pressure in the flow passage,
wherein if the pressure measured by the pressure measuring means is a predetermined value or less, the control unit determines that the pressure difference between the paths is the predetermined value or less.

5. The vehicle air conditioner according to any one of claims 1 to 4, wherein
the air conditioning operation mode includes an operation stop mode for stopping operation of the vehicle air conditioner.

6. The vehicle air conditioner according to claim 5, wherein the vehicle is an electric vehicle, and
if the instruction for switching to the operation stop mode is inputted while operation of the vehicle is stopping, the control unit defers the action of the flow passage selector valve until the predetermined time elapses.

7. A vehicle air conditioner, comprising:
compression means which is driven by electric power from a secondary battery installed on a vehicle to compress a heating medium;
pressure reducing means for reducing a pressure of the heating medium;
a heat exchanger for performing heat exchange between the heating medium and air;
a flow passage having a heating path through which the heating medium passes during heating, and a cooling path through which the heating medium passes during cooling;
a flow passage selector valve for changing the path in the flow passage; and
a control unit for allowing the flow passage selector valve to act in accordance with an air conditioning operation mode,
**characterized in that** if a switching instruction on the air conditioning operation mode is inputted, the control unit stops the compression means, and also defers a switching action of the flow passage selector valve until a pressure difference between the paths becomes a predetermined value or less.
